# EUROPEAN PATENT SPECIFICATION

(11) **EP 3 617 022 B1**
(45) Date of publication and mention of the grant of the patent: **18.11.2020**
(21) Application number: 19186763.9
(22) Date of filing: 17.07.2019
(51) Int. Cl.: B60W 50/00, B60W 10/184, B60W 10/24, B60W 10/06, B60W 10/08, B60W 10/30, B60W 20/12, B60W 20/13, B60W 30/12, B60W 50/10, B60W 50/14

(54) **VEHICLE CONTROL SYSTEM**
FAHRZEUGSTEUERUNGSSYSTEM
SYSTÈME DE COMMANDE DE VÉHICULE

(30) Priority: 03.09.2018 JP 2018164729
(43) Date of publication of application: 04.03.2020
(73) Proprietor: TOYOTA JIDOSHA KABUSHIKI KAISHA, Toyota-shi, Aichi-ken 471-8571 (JP)
(72) Inventor: ITABASHI, Kaiji, Toyota-shi, Aichi-ken, 471-8571 (JP); KONO, Katsumi, Toyota-shi, Aichi-ken, 471-8571 (JP); TAIRA, Tetsuya, Toyota-shi, Aichi-ken, 471-8571 (JP); FUJISHIMA, Shunsuke, Toyota-shi, Aichi-ken, 471-8571 (JP); IDOGAWA, Masanao, Toyota-shi, Aichi-ken, 471-8571 (JP); MITSUTANI, Noritake, Toyota-shi, Aichi-ken, 471-8571 (JP); YAMADA, Yoshihisa, Toyota-shi, Aichi-ken, 471-8571 (JP); NAKANO, Hiroki, Toyota-shi, Aichi-ken, 471-8571 (JP); YANAI, Takashi, Toyota-shi, Aichi-ken, 471-8571 (JP); ITO, Ryo, Toyota-shi, Aichi-ken, 471-8571 (JP)
(74) Representative: Kuhnen & Wacker Patent- und Rechtsanwaltsbüro PartG mbB

(56) References cited:
- DE-A1-102005 022 725
- DE-A1-102014 224 665
- US-A1- 2003 171 865
- US-A1- 2009 024 263

## Description

### BACKGROUND OF THE INVENTION

### Field of the Invention

The present invention relates to a system for controlling a vehicle.

### Description of the Background Art

A vehicle in which a plurality of management sections for adjusting requests which occur in the vehicle and managing vehicle operations associated with the requests are provided for request types, respectively, is known. For example, Patent Literature 1 (Japanese Laid-Open Patent Publication No. H10-250416), Patent Literature 2 (Japanese Laid-Open Patent Publication No. H10-250417), and Patent Literature 3 (Japanese Laid-Open Patent Publication No. H10-315883) disclose a vehicle control device that has a plurality of management sections for managing respective requests which are related to mechanical resources, electrical resources, thermal resources, and the like, and which occur in the vehicle.

DE 10 2014 224665 A1 discloses a vehicle control system comprising a system configured to control a plurality of different functions of a vehicle, wherein the system each includes a plurality of input sections, an input adjustment section configured to adjust one or more requests, input through the plurality of input sections, for controlling a predetermined vehicle function, a plurality of output sections associated with the vehicle function, and a management section configured to manage operations of the plurality of output sections, based on a request adjusted by the input adjustment section.

In recent years, a request that occurs in a vehicle has become complicated due to development of on-vehicle functions, and the management capability of each management section is expanded so as to meet the complicated request. However, although the management capability of each management section is individually expanded, optimal control for the entirety of the vehicle has not been sufficiently considered.

### SUMMARY OF THE INVENTION

The present invention has been made in view of the aforementioned problem, and an object of the present invention is to provide a vehicle control system capable of performing optimal control for the entirety of the vehicle.

In order to solve the aforementioned problem, a vehicle control system according to one aspect of the present invention includes a plurality of systems configured to control a plurality of different functions, respectively, of a vehicle, and the plurality of systems each include: a plurality of input sections; an input adjustment section configured to adjust one or more requests, inputted through the plurality of input sections, for controlling a predetermined vehicle function; a plurality of output sections associated with the vehicle function; and a management section configured to manage operations of the plurality of output sections, based on a request adjusted by the input adjustment section. The management sections are capable of transmitting to each other and receiving from each other at least information that is associated with management based on the adjusted request.

The vehicle control system according to the present disclosure allows a plurality of management sections in a plurality of systems to manage a plurality of requests in cooperation with each other, so that optimal control can be performed for the entirety of the vehicle.

These and other objects, features, aspects, and advantages of the present invention will become more apparent from the following detailed description of the present invention when taken in conjunction with the accompanying drawings.

### BRIEF DESCRIPTION OF THE DRAWINGS

FIG. 1 is a functional block diagram illustrating a vehicle control system according to an embodiment;
FIG. 2 is a sequence diagram illustrating an example of a process performed by a management section of a first system;
FIG. 3 is a sequence diagram illustrating an example of a process performed by each of management sections of the first to fourth systems; and
FIG. 4 is a sequence diagram illustrating an example of a process performed by each of the management sections of the first to the fourth systems.

### DESCRIPTION OF THE PREFERRED EMBODIMENTS

### [Outline]

A vehicle control system according to the present embodiment has a plurality of systems that control a plurality of predetermined different functions, respectively, of a vehicle, and a plurality of management sections of the plurality of systems mutually transmit and receive information associated with the management. Thus, optimal control can be performed for the entirety of the vehicle.

### [Configuration]

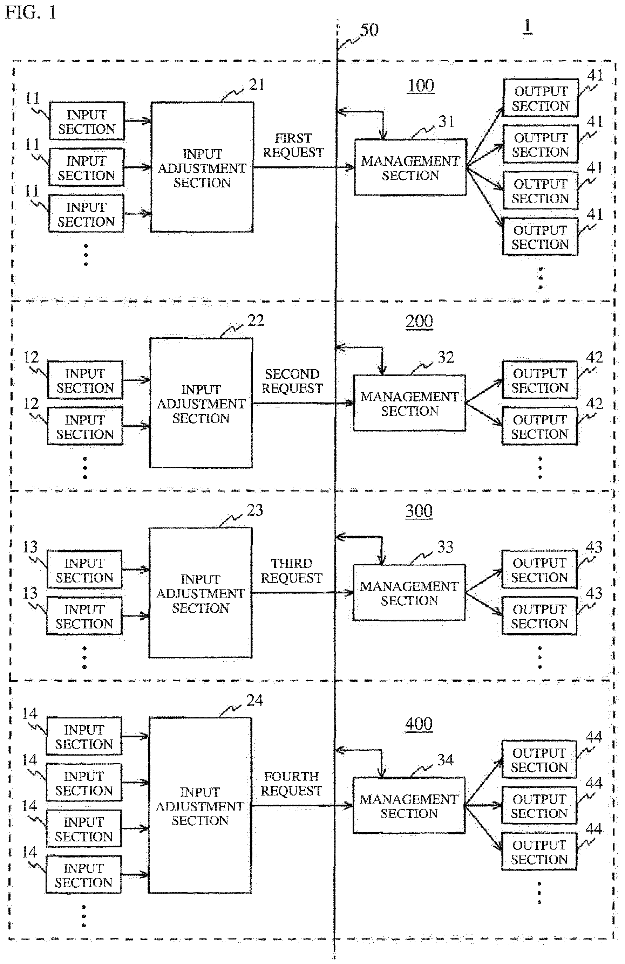

FIG. 1 is a functional block diagram illustrating an example of a configuration of a vehicle control system 1 according to the present embodiment. The vehicle control system 1 illustrated in FIG. 1 includes a first system 100, a second system 200, a third system 300, and a fourth system 400. The first system 100 includes a plurality of input sections 11, an input adjustment section 21, a management section 31, and a plurality of output sections 41. The second system 200 includes a plurality of input sections 12, an input adjustment section 22, a management section 32, and a plurality of output sections 42. The third system 300 includes a plurality of input sections 13, an input adjustment section 23, a management section 33, and a plurality of output sections 43. The fourth system 400 includes a plurality of input sections 14, an input adjustment section 24, a management section 34, and a plurality of output sections 44. The vehicle control system 1 is mounted to a vehicle. The configuration of the vehicle control system 1 shown in FIG. 1 is merely illustrative, and the number of each of the systems, the input sections, the input adjustment sections, the management sections, and the output sections is not limited to the number illustrated in FIG. 1. A part of each of the input sections and the output sections may be shared.

### 1. First system 100

The first system 100 may be, for example, a movement-associated system that controls functions (hereinafter, referred to as "first function") associated with movement such as "running", "turning", and "stopping" of the vehicle. When the first system 100 is the movement-associated system, the plurality of input sections 11 are devices (camera sensor, millimeter wave radar, ultrasonic sonar, and the like) that obtain information representing a situation around the vehicle and information representing a state of the vehicle, and devices (accelerator, brake, steering, gearshift, and the like) that receive inputs of operations (driver operations), by a driver, associated with driving of the vehicle. Each of the plurality of input sections 11 obtains information associated with the movement of the vehicle, and outputs the information to the input adjustment section 21.

The plurality of output sections 41 include an electronic control unit (ECU) that controls the first function and an actuator (ACT) that executes the first function. When the first system 100 is the movement-associated system, the plurality of output sections 41 may be, for example, actuators for an engine, a transmission, a hybrid motor, a fuel cell unit, and an electric motor which configure a power train, and an ECU and the like for controlling the actuators, a brake and a parking brake associated with braking of the vehicle and an ECU and the like for controlling the brakes, and an electric power steering associated with operation of the steering and an ECU and the like for controlling the steering.

The input adjustment section 21 determines a control content for the first function based on the information which is associated with the movement of the vehicle and obtained by the plurality of input sections 11, and outputs a first request corresponding to the determined control content (adjustment of the request). The first request is a request for driving the plurality of output sections 41, and may represent, for example, acceleration and deceleration. The number of the first requests to be outputted may be one or plural. The input adjustment section 21 includes, as an example of the movement-associated system, a device that can execute a drive support function for the vehicle such as automatic driving, automatic parking, adaptive cruise control, lane keeping assist, and a collision mitigation braking, and the input adjustment section 21 can output the first request based on information (distance between vehicles, traveling lane, and the like) that represents a situation around the vehicle and that is obtained from the input sections 11, and information (vehicle speed, remaining amount of fuel/electricity, and the like) that represents a state of the vehicle and that is obtained from the input sections 11. Furthermore, the input adjustment section 21 may include, as an example of the movement-associated system, a device that mediates an operation of the vehicle by a driver, and the input adjustment section 21 can output the first request based on the information (accelerator pedal depression amount, brake pedal depression amount, steering angle for steering, and the like) that represents the operation of the driver and is obtained from the input section 11.

The management section 31 may be a so-called movement manager that can receive the first request outputted by the input adjustment section 21, and control the operations, of the plurality of output sections 41, corresponding to the first function so as to meet the first request. Specifically, when the number of the first requests is plural, the management section 31 selects one request from among the plurality of the first requests based on a predetermined criterion, or sets an allowable range for an operation of the output section 41 based on the plurality of the first requests, to mediate the first requests. The management section 31 provides the plurality of output sections 41 with instructions for operations based on the selected first request or the set allowable range.

The management section 31 may include a manager (power train manager) for managing a power train system, a manager (braking manager) for managing a braking system, and a manager (steering manager) for managing a steering system. In this case, the power train manager may collectively process instructions, for operations, to the output sections that configure the power train, the braking manager may collectively process instructions, for operations, to the output sections for braking of the vehicle, and the steering manager may collectively process instructions, for operations, to the output sections for operations of the steering. Furthermore, the plurality of output sections 41 may notify the management section 31 of the information on movement control (availability) that can be executed at present. Through the notification of the information on availability, the operations of the plurality of output sections 41 can be appropriately managed. Furthermore, the management section 31 has a communication function that allows predetermined information described below to be transmitted to and received from the other management sections 32, 33, and 34 via an on-vehicle network 50 such as a communication bus.

### 2. Second system 200

The second system 200 may be, for example, an electric-power-associated system that controls functions (hereinafter, referred to as "second function") associated with electric power management for effectively controlling (power distribution management) electric power consumption and supply such as charging and discharging, and voltage conversion in the vehicle. When the second system 200 is the electric-power-associated system, the plurality of input sections 12 are switches (start and stop button and the like) for starting/stopping the vehicle, and switches (air-conditioner control button, seat heater control button, and the like) for air conditioning. Each of the plurality of input sections 12 obtains information associated with the electric power management for the vehicle, and outputs the information to the input adjustment section 22.

The plurality of output sections 42 include an electronic control unit (ECU) that controls the second function and an actuator (ACT) that executes the second function. When the second system 200 is the electric-power-associated system, the plurality of output sections 42 may be, for example, actuators for an alternator, a motor, and a DCDC convertor which correspond to the second function for electric power management of the vehicle, and power storage elements such as a battery (high voltage) for driving and an auxiliary battery (low voltage), and an ECU and the like for controlling these units.

The input adjustment section 22 determines a control content for the second function based on the information which is associated with the electric power management for the vehicle and obtained by the plurality of input sections 12, and outputs a second request corresponding to the determined control content (adjustment of the request). The second request is a request for driving the plurality of output sections 42, and may represent, for example, a power storage amount (SOC) or an amount of electric power. The number of the second requests to be outputted may be one or plural. The input adjustment section 22 may include, as an example of the electric-power-associated system, a device which can execute a drive support function for the vehicle, and the input adjustment section 22 can output the second request based on the information (set temperature, energization or non-energization, and the like) that represents a state of the vehicle and that is obtained from the input section 12.

The management section 32 may be a so-called electric power manager that can receive the second request outputted by the input adjustment section 22 and control the operations, of the plurality of output sections 42, corresponding to the second function so as to meet the second request. Specifically, when the number of the second requests is plural, the management section 32 selects one request from among the plurality of the second requests based on a predetermined criterion, or sets an allowable range for an operation of the output section 42 based on the plurality of the second requests, to mediate the second requests. The management section 32 provides the plurality of output sections 42 with instructions for operations based on the selected second request or the set allowable range.

The plurality of output sections 42 may notify the management section 32 of information on electric power control (availability) that can be executed at present. Through the notification of the information on availability, the operations of the plurality of output sections 42 can be appropriately managed. Furthermore, the management section 32 has a communication function that allows predetermined information described below to be transmitted to and received from the other management sections 31, 33, and 34 via the on-vehicle network 50.

### 3. Third system 300

The third system 300 may be, for example, a heat-associated system that controls functions (hereinafter, referred to as "third function") associated with heat management for efficiently controlling (heat distribution management) demand and supply of heat such as exhaust heat and heating in the vehicle. When the third system 300 is the heat-associated system, the plurality of input sections 13 may be switches (start and stop button, and the like) for starting/stopping the vehicle, and switches (air-conditioner control button, seat heater control button, and the like) for air conditioning. Each of the plurality of input sections 13 obtains information associated with the heat management for the vehicle, and outputs the information to the input adjustment section 23.

The plurality of output sections 43 include an electronic control unit (ECU) that controls the third function, and an actuator (ACT) that executes the third function. When the third system 300 is the heat-associated system, the plurality of output sections 43 may be, for example, actuators for an engine, an air conditioner, a heat pump, a seat heater, and a radiator cooling fan which correspond to the third function for heat management for the vehicle, and an ECU and the like for controlling the actuators.

The input adjustment section 23 determines a control content for the third function based on the information which is associated with heat management for the vehicle and obtained by the plurality of input sections 13, and outputs a third request corresponding to the determined control content (adjustment of the request). The third request is a request for driving the plurality of output sections 43, and may represent, for example, an amount of heat. The number of the third requests to be outputted may be one or plural. The input adjustment section 23 may include, as an example of the heat-associated system, a device that can execute a drive support function for the vehicle, and the input adjustment section 23 can output the third request based on the information (set temperature, energization or non-energization, and the like) that represents a state of the vehicle and that is obtained by the input section 13.

The management section 33 may be a so-called heat manager that can receive the third request outputted by the input adjustment section 23, and control the operations, of the plurality of output sections 43, corresponding to the third function so as to meet the third request. Specifically, when the number of the third requests is plural, the management section 33 selects one request from among the plurality of the third requests based on a predetermined criterion or sets an allowable range for an operation of the output section 43 based on the plurality of the third requests, to mediate the third requests. The management section 33 provides the plurality of output sections 43 with instructions for operations based on the selected third request or the set allowable range. In the third system 300 as an example of the heat-associated system, the management section 33 provides a heat generator (engine, heat pump, and the like) or a heat exchanger (radiator, intercooler, and the like) with instructions for distributing heat to an air conditioner, when the temperature in the vehicle interior needs to be increased to a predetermined temperature by the air conditioner.

The plurality of output sections 43 may notify the management section 33 of information on heat control (availability) that can be executed at present. Through the notification of the information of availability, the operations of the plurality of output sections 43 can be appropriately managed. The management section 33 has a communication function that allows predetermined information described below to be transmitted to and received from the other management sections 31, 32, and 34 via the on-vehicle network 50.

### 4. Fourth system 400

The fourth system 400 may be, for example, a Human Machine Interface-associated system (HMI-associated system) that controls functions (hereinafter, referred to as "fourth function") associated with electrical equipment control (usability) for providing a preferable display on a navigation screen, a meter, and the like of the vehicle and providing a suitable operation for the vehicle. When the fourth system 400 is the HMI-associated system, the plurality of input sections 14 are devices (electronic key, communication antenna, and the like) for wireless control, switches (indicator button, light button, and the like) for operation of the vehicle, and equipment (outlet, cigar socket, and the like) associated with an interface. Each of the plurality of input sections 14 obtains information associated with the HMI operation of the vehicle, and outputs the information to the input adjustment section 24.

The plurality of output sections 44 include an electronic control unit (ECU) that controls the fourth function and an actuator (ACT) that executes the fourth function. When the fourth system 400 is the HMI-associated system, the plurality of output sections 44 may be, for example, actuators for a light, wiper, and seat and a display device such as a display, which correspond to the fourth function associated with the HMI operation of the vehicle, and an ECU that controls these devices.

The input adjustment section 24 determines a control content for the fourth function based on the information which is associated with the HMI operation of the vehicle and obtained by the plurality of input sections 14, and outputs a fourth request corresponding to the determined control content (adjustment of the request). The fourth request is a request for driving the plurality of output sections 44, and may represent, for example, a control signal (voltage, current). The number of the fourth requests to be outputted may be one or plural. The input adjustment section 24 may include, as an example of the HMI-associated system, a device that can execute a drive support function for the vehicle, and the input adjustment section 24 can output the fourth request based on the information (weather, illuminance, and the like) that represents a situation around the vehicle and that is obtained by the input section 14.

The management section 34 may be a so-called HMI manager that can receive the fourth request outputted by the input adjustment section 24, and control the operations, of the plurality of output sections 44, corresponding to the fourth function so as to meet the fourth request. Specifically, when the number of the fourth requests is plural, the management section 34 selects one request from among the plurality of the fourth requests based on a predetermined criterion, or sets an allowable range for an operation of the output section 44 based on the plurality of the fourth requests, to mediate the fourth requests. The management section 34 provides the plurality of output sections 44 with instructions for operations based on the selected fourth request or the set allowable range.

The plurality of output sections 44 may notify the management section 34 of information on control (availability) that can be executed at present. Through the notification of the information of availability, the operations of the plurality of output sections 44 can be appropriately managed. Furthermore, the management section 34 has a communication function that allows predetermined information described below to be transmitted to and received from the other management sections 31, 32, and 33 via the on-vehicle network 50.

### 5. Cooperation among systems

The management sections 31, 32, 33, and 34 described above each have a communication function of mutually transmitting and receiving, via the on-vehicle network 50, predetermined information (hereinafter, referred to as "management information") which is associated with management based on the requests received from the input adjustment sections, respectively. The on-vehicle network 50 is, for example, a CAN (Controller Area Network). The management information may be a request received from the input adjustment section, may be a physical quantity based on the request, or may be a physical quantity obtained after the requests are mediated by the management section. For example, when the request received from the input adjustment section represents movement of the vehicle, the physical quantity based on the request is an acceleration/deceleration, a yaw rate, or the like which is required for the movement of the vehicle, and the physical quantity obtained after the requests are mediated by the management section is a steering angle provided as an instruction to the steering, a braking force provided as an instruction to the brake, or the like.

In the cooperation among the systems, specifically, the management section 31 can transmit, to the management sections 32, 33, and 34, the management information based on the first request which is received from the input adjustment section 21, and can also receive the management information based on the second request, the third request, and the fourth request from the management sections 32, 33, and 34. The management section 32 can transmit, to the management sections 31, 33, and 34, the management information based on the second request which is received from the input adjustment section 22, and can also receive the management information based on the first request, the third request, and the fourth request from the management sections 31, 33, and 34. The management section 33 can transmit, to the management sections 31, 32, and 34, the management information based on the third request which is received from the input adjustment section 23, and can also receive the management information based on the first request, the second request, and the fourth request from the management sections 31, 32, and 34. The management section 34 can transmit, to the management sections 31, 32, and 33, the management information based on the fourth request which is received from the input adjustment section 24, and can also receive the management information based on the first request, the second request, and the third request from the management sections 31, 32, and 33. This communication function allows each management section to grasp the states of managements, for the output sections, performed by the other management sections, respectively, and to make use of the states of managements for its own management of the output sections.

Each management section may constantly transmit, to the other management sections, the management information based on the request addressed to itself. Thus, each management section can optimally control operations of the output sections managed by itself in consideration of states from the other management sections. Particularly, in a case where the management information represents a physical quantity based on the request, when the physical quantity based on the request cannot be satisfied merely by the operations of the output sections managed by each management section, the management section can transmit, to the other management sections, information representing a physical quantity that is short. Thus, an amount of communication of information via the on-vehicle network 50 is not unnecessarily great, whereby management process can be inhibited from being delayed. Preferably, the physical quantity handled by each management section and the unit thereof, are each standardized to any one of a driving force or a braking force [N], a power [W], an amount of heat [J], and the like (as a rule). When the physical quantity handled by each management section is standardized, a system that handles a request in which the physical quantity is different can be easily added or removed. When the units of the physical quantity are different, each management section preferably transmits, to the other management sections, information represented by the physical quantity in a predetermined standardized unit, or preferably converts the unit of the physical quantity represented in the information which is received by each management section, to a unit of the physical quantity handed by itself.

Furthermore, based on the management information received from another of the management sections, each management section can control an operation of the output section managed by itself, or request the management section other than said another management section which has transmitted the management information to control the operation of the output section. Whether or not each management section controls its own management based on the management information received from the other management sections can be determined based on the priority, urgency, or the like of the process being performed at present.

### [Management control by cooperation among systems]

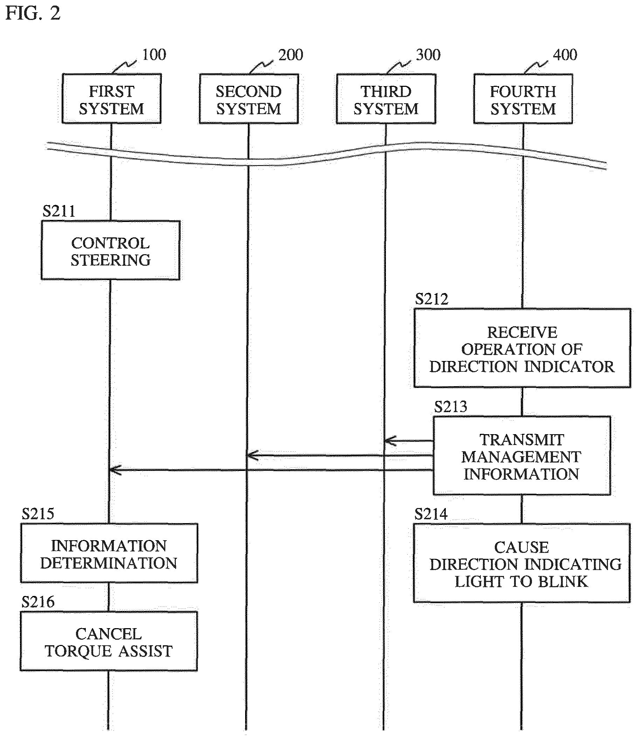

Next, examples where management control is performed by the cooperation among the systems in the vehicle control system 1 will be specifically described with reference to FIG. 2 to FIG. 4. FIG. 2 to FIG. 4 each illustrate, as a process sequence, a specific example in which a request received from the input adjustment section is transmitted as the management information.

### <Specific example 1>

The cooperative control among the systems according to specific example 1 will be described. In the cooperative control among the systems according to specific example 1, notification of information on a request that has occurred in any one of the systems is made to the other systems, and, thus, one or more of the other systems perform control in cooperation with each other so as to assist an operation, of the output section, which is associated with movement of the vehicle and is based on the request. In specific example 1 shown in FIG. 2, a case will be described in which input for operating a direction indicator is made via a turn signal control lever that is one of the input sections 14 of the fourth system 400 in a state (step S211) where the management section 31 of the first system 100 manages control of the steering which is one of the output sections 41, based on the lane keeping assist (LKA) function.

Step S212: The management section 34 of the fourth system 400 receives, from the input adjustment section 24, the fourth request for operating the direction indicator.

Step S213: The management section 34 of the fourth system 400 transmits the management information based on the received fourth request, e.g., information indicating "direction indicator ON", to each of the management section 31 of the first system 100, the management section 32 of the second system 200, and the management section 33 of the third system 300.

Step S214: The management section 34 of the fourth system 400 performs control so as to cause a direction indicating light (turn signal lamp) that is one of the output sections 44 to blink based on the received fourth request.

Step S215: The management section 31 of the first system 100 determines that a driver intends to change a traveling lane, based on the management information received from the fourth system 400. Based on this determination, the management section 31 determines that the control of the steering by the lane keeping assist function needs to be temporarily changed. Specifically, the management section 31 determines that torque assist, for the steering, performed so as to prevent the vehicle from deviating from the traveling lane needs to be canceled during lane change.

Step S216: The management section 31 of the first system 100 changes control so as not to generate a torque in a direction opposite to the steering direction even when the steering is operated (canceling of torque assist).

When the lane change has been completed, the management section 34 transmits, to the first system 100, the management information indicating that the lane change has been completed. When the management section 31 receives, from the fourth system 400, the management information indicating that the lane change has been completed, the control which has been temporarily performed for smooth lane change can be restored to the original state.

Such cooperation between the fourth system 400 and the first system 100 allows a driver to attain an object of smoothly performing lane change. Therefore, vehicle control based on the driver's intention can be performed with comfortability while safe traveling of the vehicle is assured.

### <Specific example 2>

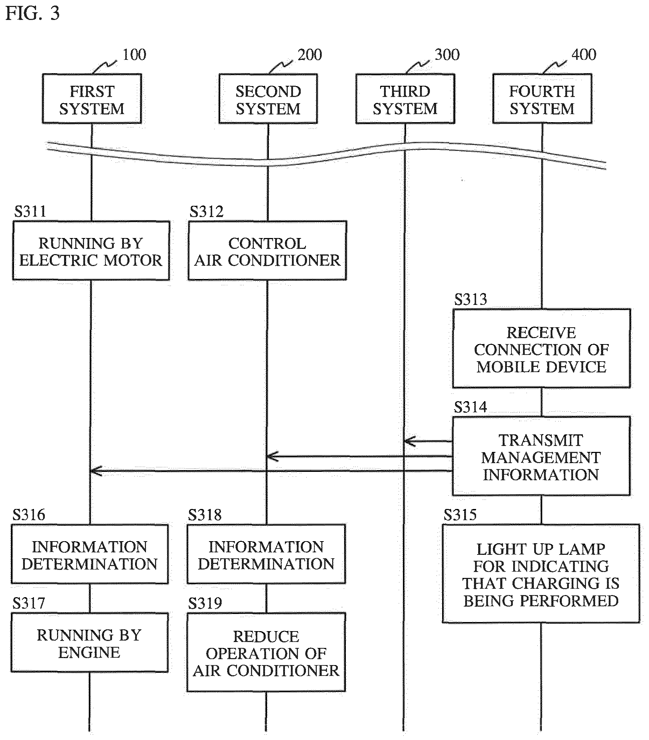

The cooperative control among the systems according to specific example 2 will be described. In the cooperative control among the systems according to specific example 2, notification of information on a request that has occurred in any one of the systems is made to the other systems, and, thus, one or more of the other systems perform control in cooperation with each other so as to shorten a time up to completion of an operation, of the output section, which is associated with electric power balance and is based on the request. In specific example 2 shown in FIG. 3, a case will be described in which an external device such as a smartphone is plugged into an accessory socket that is one of the input sections 14 of the fourth system 400 in a state (step S311) where the management section 31 of the first system 100 manages control, based on EV running, of an electric motor that is one of the output sections 41, and a state (step S312) where the management section 32 of the second system 200 manages control of an air conditioner that is one of the output sections 42 so as to cool the interior of the vehicle.

Step S313: The management section 34 of the fourth system 400 receives, from the input adjustment section 24, the fourth request for starting charging the connected external device.

Step S314: The management section 34 of the fourth system 400 transmits the management information based on the received fourth request, e.g., information indicating "start charging the external device", to each of the management section 31 of the first system 100, the management section 32 of the second system 200, and the management section 33 of the third system 300.

Step S315: The management section 34 of the fourth system 400 performs control so as to light up a lamp indicating that the external device is being charged, on a display unit (information display, and the like) that is one of the output sections 44, based on the received fourth request.

Step S316: The management section 31 of the first system 100 determines that a power storage amount (SOC) of the battery may be reduced, based on the management information received from the fourth system 400. Based on the determination, the management section 31 determines, for example, that the battery needs to be charged at least until charging of the external device is completed. Specifically, the management section 31 determines that running in which electric power is consumed by the electric motor needs to be changed to running in which electric power is stored by using the engine.

Step S317: The management section 31 of the first system 100 performs control so as to change the running by the electric motor to the running by the engine, according to the determination based on the management information in step S316.

Step S318: The management section 32 of the second system 200 determines that a power storage amount (SOC) of the battery may be reduced, based on the management information received from the fourth system 400. Based on the determination, the management section 32 determines, for example, that power consumption of the battery needs to be reduced at least until charging of the external device is completed. Specifically, the management section 32 determines that an operation of the air conditioner needs to be reduced.

Step S319: The management section 32 of the second system 200 performs control for reducing an operation of the air conditioner. For example, the set temperature may be increased by 1 to 2°C, or airflow rate may be changed from "high" to "low".

When the charging of the external device has been completed, the management section 34 transmits the management information indicating that the charging has been completed, to the first system 100 and the second system 200. When the management section 31 and the management section 32 receive, from the fourth system 400, the management information indicating that the charging of the external device has been completed, the control which has been temporarily performed for assuring electric power can be restored to the original state.

Such cooperation between the fourth system 400, and the first and second systems 100 and 200 allows an object of efficiently completing the charging of the external device quickly to be attained. Therefore, vehicle control based on the driver's intention can be performed so as to exhibit high convenience while comfortability in the vehicle is maintained.

Specific example 2 can be utilized also for traveling route information provided by a car navigation device or the like. For example, the systems can share the management information indicating that map information of the car navigation device tells that a downslope where a power storage amount (SOC) of the battery can be charged by 10% is 1 km away from the present position in the traveling route. When, at this time, the power storage amount of the battery has already reached 95%, half the electric power obtained at the downslope will be surplus and be wasted. Therefore, in such a case, control for consuming the power storage amount of the battery so as to be reduced to 90% within a range in which running is not influenced, can be performed by the systems.

### <Specific example 3>

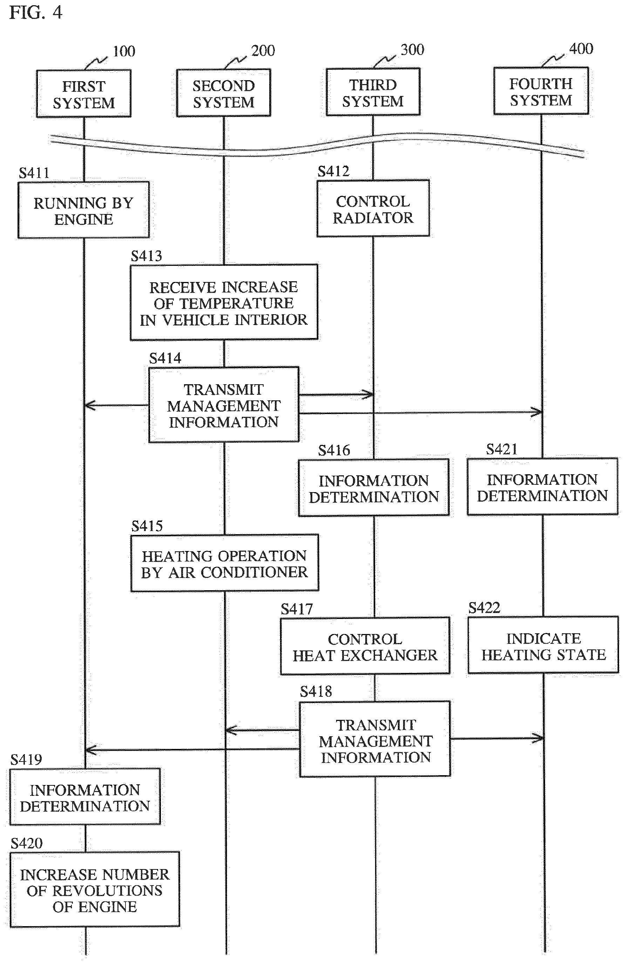

The cooperative control among the systems according to specific example 3 will be described. In the cooperative control among the systems according to specific example 3, notification of information on a request that has occurred in any one of the systems is made to the other systems, and, thus, one or more of the other systems perform control in cooperation with each other so as to efficiently complete an operation, of the output section, which is associated with heat balance and is based on the request. In specific example 3 shown in FIG. 4, a case will be described in which input for increasing a temperature in a vehicle interior is made via an air conditioner controller that is one of the input sections 12 of the second system 200 in a state (step S411) where the management section 31 of the first system 100 manages running by the engine that is one of the output sections 41, and a state (step S412) where the management section 33 of the third system 300 manages control of a radiator that is one of the output sections 43 so as to cool cooling water.

Step S413: The management section 32 of the second system 200 receives, from the input adjustment section 22, the second request for increasing a temperature in the vehicle interior.

Step S414: The management section 32 of the second system 200 transmits the management information based on the received second request, e.g., information indicating "increase a temperature in the vehicle interior", to the management section 31 of the first system 100, the management section 33 of the third system 300, and the management section 34 of the fourth system 400.

Step S415: The management section 32 of the second system 200 causes the air conditioner that is one of the output sections 42 to perform heating operation, based on the received second request.

Step S416: The management section 33 of the third system 300 determines that the temperature in the vehicle interior is controlled to be increased, based on the management information received from the second system 200. The management section 33 determines that heat of the cooling water can be used for increasing the temperature in the vehicle interior. Specifically, the management section 33 determines that heat collected by heat exchange between cooling water and air drawn into the vehicle, can be used.

Step S417: The management section 33 of the third system 300 performs control for collecting heat from cooling water by using a heat exchanger that is one of the output sections 43, based on the received second request.

Step S418: When the management section 33 of the third system 300 determines that the temperature in the vehicle interior cannot be efficiently increased in a short time period quickly merely by the control in step S417, the management section 33 further transmits the management information indicating that, for example, "an amount of heat is insufficient" to the management section 31 of the first system 100, the management section 32 of the second system 200, and the management section 34 of the fourth system 400.

Step S419: The management section 31 of the first system 100 determines that control for efficiently increasing the temperature in the vehicle interior in a short time period needs to be performed, based on the management information received from the third system 300. Specifically, the management section 31 determines that heat obtained by the engine needs to be increased and the heat having been thus obtained needs to be supplied for air conditioning.

Step S420: The management section 31 of the first system 100 performs control for increasing the number of revolutions of the engine.

Step S421: The management section 34 of the fourth system 400 determines that the temperature in the vehicle interior is being increased, based on the management information received from the second system 200.

Step S422: The management section 34 of the fourth system 400 causes a display unit (information display or the like) that is one of the output sections 44 to display information indicating that the vehicle interior is being heated.

When the temperature in the vehicle interior has been increased to a predetermined temperature, the management section 32 transmits the management information indicating that the temperature has been increased to the predetermined temperature, to the first system 100 and the third system 300. The management section 31 and the management section 33 receive, from the second system 200, the management information indicating that increase of the temperature in the vehicle interior has been completed, whereby control which has been temporarily performed for collecting heat can be returned to the original state.

Such cooperation between the second system 200, and the first and third systems 100 and 300 allows attainment of an object of more efficiently and quickly increasing the temperature in the vehicle interior as compared to a case where the air conditioner is merely operated. Therefore, vehicle control in which high convenience can be provided and priority is placed on comfortability for the driver can be performed without causing the driver to feel that the function of the vehicle is changed.

### <Specific example 4>

The cooperative control among the systems according to specific example 4 will be described. In the cooperative control among the systems according to specific example 4, when a request that has occurred in any one of the systems cannot be satisfied in the system, one or more of the other systems use reserve power to compensate for an insufficient operation, of the output section, which is associated with the electric power balance and is based on the request.

For example, in a case where, although the second request from the input adjustment section 22 requires that 100W of power be generated in the second system 200, availability of the output sections 42 of the second system 200 represents only 90W of power, the management section 32 cannot compensate for the insufficient power of 10W in the second system 200. Therefore, the management section 32 transmits the management information indicating that there is an insufficient power of 10W, to the first system 100, the third system 300, and the fourth system 400.

When the management section 31 of the first system 100 receives the management information from the second system 200, the management section 31 determines whether or not the insufficient power of 10W can be generated as reserve power while the first request received in the first system 100 is satisfied. When reserve power can be provided, the management section 31 provides the corresponding output section 41 with an instruction for a predetermined control. As an example of the control, control for temporarily downshifting to a lower gear for a transmission to generate regenerative power or control for temporarily generating power by rotating the engine, can be performed. When the insufficient power of 10W can be compensated for, the management section 31 may transmit the information thereof to the second system 200, the third system 300, and the fourth system 400. When a plurality of the systems can satisfy the request for the insufficient power, adjustment can be performed based on, for example, a degree of reserve power, precision and capability of the output section, or the like.

When power is no longer insufficient, the management section 32 transmits, to the first system 100, the management information indicating that power is no longer insufficient. When the management section 31 receives, from the second system 200, the management information indicating that power is no longer insufficient, control which has been temporarily performed for assuring power can be restored to the original state.

### <Specific example 5>

The cooperative control among the systems according to specific example 5 will be described. In the cooperative control among the systems according to specific example 5, when a higher priority needs to be placed on a request that has occurred in any one of the systems as compared to another request of the other of the systems, control based on the request that has occurred in the other of the systems is restricted so as to prioritize an operation, of the output section, which is based on the request having the higher priority and is associated with movement of the vehicle.

For example, in a case where a request for operating the steering at a sharp curve or the like suddenly occurs in the first system 100 in a state where an air conditioner is being operated by the second system 200, the management section 31 transmits the management information representing the steering operation state to the second system 200, the third system 300, and the fourth system 400 although the first system 100 can satisfy the request by itself.

When the management section 32 of the second system 200 receives the management information from the first system 100, since it can be determined that large current will be consumed by the steering operation which is to be prioritized from the viewpoint of safety, the management section 32 temporarily reduces (or stops) the effectiveness of the air conditioner so as to reduce the power consumption of the battery such that a battery is not consumed due to consumption of the large current.

When the steering operation has been completed, the management section 31 transmits, to the second system 200, the management information indicating that the steering operation has been completed. When the management section 32 receives, from the first system 100, the management information indicating that the steering operation has been completed, the control which has been temporarily performed for reducing power consumption can be restored to the original state.

### [Effect]

As described above, the vehicle control system according to one embodiment of the present invention is structured such that, in a plurality of systems, the management sections are each a functional section for receiving adjusted request(s) from the input sections of the corresponding system and controlling the output section which is determined according to a control content of the adjusted request(s), and the management sections are connected to each other to perform mutual transmission and reception of the management information. Thus, the plurality of the management sections can preferably perform various operations in cooperation with each other. Therefore, various functions can be executed and efficiently performed by cooperation among the output sections of all the systems, by using a simple system configuration, without using a complicated system configuration in which the input sections and the output sections in different systems each have, for example, a one-to-one connection, and the systems communicate with each other to individually request, arbitrate, and control the operation.

The cooperation among the output sections of all the systems may be performed, for example, for causing any one of the systems to assist the operation, of the output section, executed by the other of the systems, causing any one of the systems to perform an operation for shortening a time up to completion of the operation, of the output section, executed by the other of the systems, causing any one of the systems to perform an operation for efficiently completing the operation, of the output section, executed by the other of the systems, causing any one of the systems to compensate for an operation, of the output section, executed by the other of the systems, or causing any one of the systems to prioritize an operation, of the output section, executed by the other of the systems.

Thus, functions can be easily added to the vehicle control system by addition of functions to the management sections. Therefore, designing and evaluating steps performed according to difference in vehicle type, destination, and unit can be reduced, and development and quality control steps can be reduced.

The present invention can be implemented not only by the vehicle control system, but also by a method executed by a computer of each system of the vehicle control system, a program, a computer-readable non-transitory storage medium having a program stored therein, or a vehicle having the vehicle control system mounted therein.

While the invention has been described in detail, the foregoing description is in all aspects illustrative and not restrictive. It will be understood that numerous other modifications and variations can be devised without departing from the scope of the invention.

## Claims

1. A vehicle control system (1) comprising
a plurality of systems (100, 200, 300, 400) configured to control a plurality of different functions, respectively, of a vehicle, wherein
the plurality of systems (100, 200, 300,400) each include
a plurality of input sections (11, 12, 13, 14),
an input adjustment section (21, 22, 23, 24) configured to adjust one or more requests, inputted through the plurality of input sections (11, 12, 13, 14), for controlling a predetermined vehicle function,
a plurality of output sections (41, 42, 43, 44) associated with the vehicle function, and
a management section (31, 32, 33, 34) configured to manage operations of the plurality of output sections (41, 42, 43, 44), based on a request adjusted by the input adjustment section (21, 22, 23, 24), and
the management sections (31, 32, 33, 34) are capable of transmitting to each other and receiving from each other at least information that is associated with management based on the adjusted request.

2. The vehicle control system (1) according to claim 1, wherein at least one of the management sections (31, 32, 33, 34) manages the operations of the output sections (41, 42, 43, 44), based further on information that is associated with management based on the request received from another of the management sections.

3. The vehicle control system (1) according to claim 1, wherein the management sections (31, 32, 33, 34) transmit to each other and receive from each other the information that is associated with the management based on the request, by using a predetermined physical quantity.

4. The vehicle control system (1) according to claim 2, wherein the management sections (31, 32, 33, 34) transmit to each other and receive from each other the information that is associated with the management based on the request, by using a predetermined physical quantity.

5. The vehicle control system (1) according to claim 1, wherein the plurality of functions include a function associated with movement of the vehicle, a function associated with distribution of electric power, a function associated with distribution of heat, and a function associated with control of electrical equipment.

6. The vehicle control system (1) according to claim 2, wherein the plurality of functions include a function associated with movement of the vehicle, a function associated with distribution of electric power, a function associated with distribution of heat, and a function associated with control of electrical equipment.

7. The vehicle control system (1) according to claim 3, wherein the plurality of functions include a function associated with movement of the vehicle, a function associated with distribution of electric power, a function associated with distribution of heat, and a function associated with control of electrical equipment.

8. The vehicle control system (1) according to claim 4, wherein the plurality of functions include a function associated with movement of the vehicle, a function associated with distribution of electric power, a function associated with distribution of heat, and a function associated with control of electrical equipment.

## Patentansprüche

1. Fahrzeugsteuersystem (1), aufweisend:
eine Mehrzahl an Systemen (100, 200, 300, 400), die so konfiguriert sind, dass sie eine Mehrzahl an verschiedenen Funktionen eines Fahrzeugs steuern, wobei die Mehrzahl an Systemen (100, 200, 300, 400) jeweils beinhalten:
eine Mehrzahl an Eingabeabschnitten (11, 12, 13, 14),
einen Eingabeeinstellabschnitt (21, 22, 23, 24), der so konfiguriert ist, dass er eine oder mehrere Anfragen einstellt, die durch die Mehrzahl an Eingabeabschnitten (11, 12, 13, 14) eingegeben werden, um eine vorgegebene Fahrzeugfunktion zu steuern, eine Mehrzahl an Ausgabeabschnitten (41, 42, 43, 44), die der Fahrzeugfunktion zugeordnet sind, und
einen Verwaltungsabschnitt (31, 32, 33, 34), der so konfiguriert ist, dass er den Betrieb der Mehrzahl an Ausgabeabschnitten (41, 42, 43, 44) auf Basis einer durch den Eingabeeinstellabschnitt (21, 22, 23, 24) eingestellten Anfrage verwaltet, und wobei die Verwaltungsabschnitte (31, 32, 33, 34) in der Lage sind, zumindest Informationen, die der Verwaltung zugeordnet sind, auf Basis der eingestellten Anfrage aneinander zu übertragen und voneinander zu empfangen.

2. Fahrzeugsteuersystem (1) nach Anspruch 1, wobei zumindest einer von den Verwaltungsabschnitten (31, 32, 33, 34) den Betrieb der Ausgabeabschnitte (41, 42, 43, 44) auf Basis von Informationen, die auf Basis der von einem weiteren der Verwaltungsabschnitte empfangenen Anfrage der Verwaltung zugeordnet sind, verwaltet.

3. Fahrzeugsteuersystem (1) nach Anspruch 1, wobei die Verwaltungsabschnitte (31, 32, 33, 34) Informationen, die der Verwaltung zugeordnet sind, auf Basis der Anfrage aneinander zu übertragen und voneinander zu empfangen, indem eine vorgegebene physikalische Menge verwendet wird.

4. Fahrzeugsteuersystem (1) nach Anspruch 2, wobei die Verwaltungsabschnitte (31, 32, 33, 34) Informationen, die der Verwaltung zugeordnet sind, auf Basis der Anfrage aneinander übertragen und voneinander empfangen, indem eine vorgegebene physikalische Menge verwendet wird.

5. Fahrzeugsteuersystem (1) nach Anspruch 1, wobei die Mehrzahl an Funktionen eine Funktion, die der Bewegung des Fahrzeugs zugeordnet ist, eine Funktion, die der Verteilung elektrischer Leistung zugeordnet ist, eine Funktion, die der Verteilung von Wärme zugeordnet ist und eine Funktion, die der Steuerung von elektrischer Ausrüstung zugeordnet ist, beinhaltet.

6. Fahrzeugsteuersystem (1) nach Anspruch 2, wobei die Mehrzahl an Funktionen eine Funktion, die der Bewegung des Fahrzeugs zugeordnet ist, eine Funktion, die der Verteilung elektrischer Leistung zugeordnet ist, eine Funktion, die der Verteilung von Wärme zugeordnet ist und eine Funktion, die der Steuerung von elektrischer Ausrüstung zugeordnet ist, beinhaltet.

7. Fahrzeugsteuersystem (1) nach Anspruch 3, wobei die Mehrzahl an Funktionen eine Funktion, die der Bewegung des Fahrzeugs zugeordnet ist, eine Funktion, die der Verteilung elektrischer Leistung zugeordnet ist, eine Funktion, die der Verteilung von Wärme zugeordnet ist und eine Funktion, die der Steuerung von elektrischer Ausrüstung zugeordnet ist, beinhaltet.

8. Fahrzeugsteuersystem (1) nach Anspruch 4, wobei die Mehrzahl an Funktionen eine Funktion, die der Bewegung des Fahrzeugs zugeordnet ist, eine Funktion, die der Verteilung elektrischer Leistung zugeordnet ist, eine Funktion, die der Verteilung von Wärme zugeordnet ist und eine Funktion, die der Steuerung von elektrischer Ausrüstung zugeordnet ist, beinhaltet.

## Revendications

1. Système de commande de véhicule (1) comprenant :
une pluralité de systèmes (100, 200, 300, 400) configurée pour commander une pluralité de fonctions différentes, respectivement, d'un véhicule, dans lequel :
les systèmes de la pluralité de systèmes (100, 200, 300, 400) comportent chacun :
une pluralité de sections d'entrée (11, 12, 13, 14),
une section d'ajustement d'entrée (21, 22, 23, 24) configurée pour ajuster une ou plusieurs demande(s) introduite(s) par l'intermédiaire de la pluralité de sections d'entrée (11, 12, 13, 14), pour commander une fonction prédéterminée de véhicule,
une pluralité de sections de sortie (41, 42, 43, 44) associée à la fonction de véhicule, et
une section de gestion (31, 32, 33, 34) configurée pour gérer des opérations de la pluralité de sections de sortie (41, 42, 43, 44) sur la base d'une demande ajustée par la section d'ajustement d'entrée (21, 22, 23, 24), et
les sections de gestion (31, 32, 33, 34) sont aptes à transmettre les unes aux autres et à recevoir les unes des autres au moins une information qui est associée à la gestion sur la base de la demande ajustée.

2. Système de commande de véhicule (1) selon la revendication 1, dans lequel l'une au moins des sections de gestion (31, 32, 33, 34) gère les opérations des sections de sortie (41, 42, 43, 44) sur la base en outre d'informations qui sont associées à la gestion, sur la base de la demande reçue en provenance d'une autre des sections de gestion.

3. Système de commande de véhicule (1) selon la revendication 1, dans lequel les sections de gestion (31, 32, 33, 34) transmettent les unes aux autres et reçoivent les unes des autres les informations qui sont associées à la gestion sur la base de la demande, en utilisant une grandeur physique prédéterminée.

4. Système de commande de véhicule (1) selon la revendication 2, dans lequel les sections de gestion (31, 32, 33, 34) transmettent les unes aux autres et reçoivent les unes des autres les informations qui sont associées à la gestion sur la base de la demande, en utilisant une grandeur physique prédéterminée.

5. Système de commande de véhicule (1) selon la revendication 1, dans lequel la pluralité de fonctions inclut une fonction associée au déplacement du véhicule, une fonction associée à la distribution d'énergie électrique, une fonction associée à la distribution de chaleur et une fonction associée à la commande d'équipements électriques.

6. Système de commande de véhicule (1) selon la revendication 2, dans lequel la pluralité de fonctions inclut une fonction associée au déplacement du véhicule, une fonction associée à la distribution d'énergie électrique, une fonction associée à la distribution de chaleur et une fonction associée à la commande d'équipements électriques.

7. Système de commande de véhicule (1) selon la revendication 3, dans lequel la pluralité de fonctions inclut une fonction associée au déplacement du véhicule, une fonction associée à la distribution d'énergie électrique, une fonction associée à la distribution de chaleur et une fonction associée à la commande d'équipements électriques.

8. Système de commande de véhicule (1) selon la revendication 4, dans lequel la pluralité de fonctions inclut une fonction associée au déplacement du véhicule, une fonction associée à la distribution d'énergie électrique, une fonction associée à la distribution de chaleur et une fonction associée à la commande d'équipements électriques.
